# EUROPEAN PATENT SPECIFICATION

(11) **EP 3 957 498 B1**
(45) Date of publication and mention of the grant of the patent: **17.01.2024**
(21) Application number: 21192303.2
(22) Date of filing: 20.08.2021
(51) Int. Cl.: B60C 11/13, B60C 11/03

(54) **TIRE TREAD WITH ASYMMETRIC SHOULDER GROOVE**
REIFENLAUFFLÄCHE MIT ASYMMETRISCHER SCHULTERRILLE
BANDE DE ROULEMENT DE PNEU AVEC RAINURE D'ÉPAULEMENT ASYMÉTRIQUE

(30) Priority: 21.08.2020 US 202016999098
(43) Date of publication of application: 23.02.2022
(73) Proprietor: The Goodyear Tire & Rubber Company, Akron, OH 44316 (US)
(72) Inventor: BORTOLET, Lionel Jean-Marie, 54400 Longwy (FR); COCCON, Marco Nicolo, 2230 Luxembourg (LU); MULLER, Philippe Joseph Auguste, 6971 Champlon (BE); PASSANTE SPACCAPIETRA, Ettore, 9070 Ettelbruck (LU); NAWALE, Vaibhav, 1220 Luxembourg (LU); WINKIN, Didier, 6600 Bastogne (BE)
(74) Representative: Kutsch, Bernd

(56) References cited:
- EP-A1- 2 340 948
- EP-A1- 3 269 567
- DE-A1-102005 042 903
- DE-A1-102014 224 027
- DE-A1-102015 202 371
- US-A1- 2002 139 460
- US-B2- 8 910 682

## Description

### Field of the Invention

The present invention relates to a tire tread. More particularly, the present invention relates to a tire tread with asymmetric shoulder grooves.

### Background of the Invention

In order to improve handling, tires are conventionally provided with grooves in their treads, wherein increased groove cross sections may increase the tire's drainage capacity. However, such grooves may negatively influence the tire's steering stability and grip. During cornering, grooves of tires may be subjected to buckling and tread portions laterally adjacent to these grooves may be raised from the road's surface such that they no longer contact the road.

This phenomenon may impair the adherence contact between the road and the tire tread and may result in a loss of control when making sudden maneuvers at high speed. Specifically, typical tire grooves may generate high stress concentrations in the adjacent tread and undergo buckling during frequent handling of a tire resulting in limited dry performances. Moreover, in wet conditions, the groove's cross-sectional area may be reduced, thereby impeding its drainage capacity.

A conventional asymmetric tread portion may be provided with circumferentially extending grooves having tilted/angled sidewalls. An outermost groove may have sidewall cross sections or profiles with different tilts in respect of a line perpendicular to the planar tread. Other grooves may have sidewall cross sections which are more tilted than the counterparts of the outermost groove. This arrangement is intended to maintain a safe cornering stability and also a low noise level. However, cornering stability may still be improved, especially at high speed on a vehicle having a non-zero, positive camber angle.

It is a continuing goal of tire makers to overcome one or more of the aforementioned disadvantages.

EP 3 269 567 A1 describes a tire in accordance with the preamble of claim 1.

Further tires having asymmetric shoulder grooves are known from EP 2 340 948 A1, US 8,910,682 B2, DE 10 2005 042 903 A1, DE 10 2015 202 371 A1, DE 10 2014 224 027 A1 and US 2022/139460 A1.

### Summary of the Invention

The invention relates to a tire in accordance with claim 1.

Dependent claims refer to preferred embodiments of the invention.

### Definitions

"Axial" and "Axially" mean the lines or directions which are parallel to the axis of rotation of the tire.

Camber angle" or "camber" means an angle between the equatorial plane of the tire and a line perpendicular to the road. This angle is positive when the upper portion of the tire is tilted outwardly when mounted to the vehicle, and negative when the upper portion of the tire is tilted inwardly.

"Circumferential" means lines or directions extending along or in parallel to the perimeter of the surface of the annular tread perpendicular to the axial direction.

"Cross section" means in the present application a cross section following or lying in a plane which extends along the axial direction and the radial direction of the tire. A "cross section" with regard to the tread or its components, as for instance its grooves, may also be considered as the profile of the tread or its components.

"Equatorial plane" means the plane perpendicular to the tire's axis of rotation and passing through the center of its tread; or the plane containing the circumferential centerline of the tread.

"Groove" means an elongated void area in a tread that may extend circumferentially. A groove width or depth may be equal to its average width or depth over its length.

"Inboard" means a direction axially oriented toward a center of the vehicle.

"Inner" means, if not otherwise defined, an inner axial direction.

"Lateral" means a direction parallel to the axial direction.

"Normal Load" means the specific design inflation pressure and load assigned by the appropriate standards organization for the service condition for the tire.

"Outboard" means a direction axially oriented away from the center of the vehicle.

"Outer" means, if not otherwise defined, an outer axial direction.

"Radial" and "radially" mean directions radially toward or away from the axis of rotation of the tire. In connection with "inner" or "outer" it refers to the tire axis.

"Slip angle" or "slip" means the angle between a rolling tire's direction of travel and the orientation of the equatorial plane of the tire.

"Tread" or "Tread portion" means one or more rubber components which when bonded to a tire carcass include that portion of the tire that comes into contact with the road when the tire is normally inflated and under normal load.

### Brief Description of the Drawings

The structure, operation, and advantages of the present invention will become more apparent upon contemplation of the following description taken in conjunction with the accompanying drawings, wherein:
Figure 1 represents an example schematic cross section through a tire tread with asymmetric grooves for use with the present invention;
Figure 2 represents an example schematic cross section of an outermost groove of the example tire tread of Figure 1;
Figure 3 represents an example schematic cross section of a middle groove of the example tire tread of Figure 1;
Figure 4 represents an example schematic cross section of the tire tread of Figure 1 during a cornering maneuver;
Figure 5 represents a schematic perspective view of an asymmetric tread in accordance with the present invention;
Figure 6 represents a schematic detail perspective view of an asymmetric tread groove from Figure 5; and
Figure 7 represents a schematic detail perspective view of another asymmetric tread groove from Figure 5.

### Detailed Description of Example Embodiments of the Present Invention

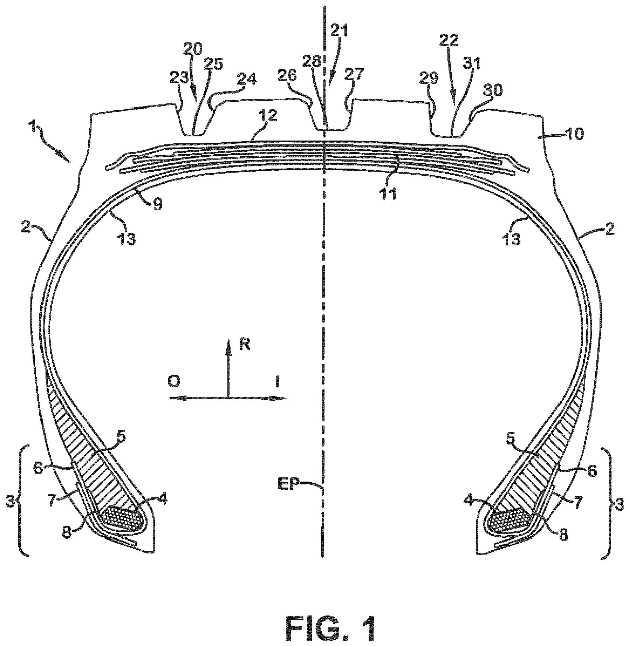

Figure 1 shows a schematic cross section of part of an example tire 1 for use with the present invention. The example tire 1 may be pneumatic or non-pneumatic. Preferably, it is a pneumatic truck tire.

The example tire 1 has an example tread 10, an inner liner 13, a belt structure 12 comprising one or more belts or belt plies 11, a carcass ply 9, two sidewalls 2, and two bead regions 3 comprising preferably apexes 5 and bead cores 4. The example tire 1 is suitable for mounting on a rim of a vehicle, as e. g., a passenger car or a truck. The depicted exemplary tire can be directional or not. Further, the example tire 1 include a generally asymmetric tread 10 in respect of the equatorial plane EP, with the example tread 10 extending between an inner sidewall 2 intended to be disposed at an inboard mounting position of a vehicle and an outer sidewall 2 intended to be disposed at an outboard mounting position of the vehicle. The carcass ply 9 may include a pair of axially opposite end portions 6, each of which is secured to a respective one of the bead cores 4. Each axial end portion 6 of the carcass ply 9 may be turned up and around each respective bead core 4 to a position sufficient to anchor each axial end portion 6 to the bead region 3. The carcass ply 9 may be a rubberized ply having a plurality of substantially parallel carcass reinforcing members made of such material as polyester, rayon, steel, carbon, fabric, titanium, and/or similar suitable materials. The turned-up portions 6 of the carcass ply 9 may engage the axial outer surfaces of two flippers 8 and axial inner surfaces of two chippers 7. The main portion of the example tread 10 may be formed of any suitable tread compound or compounds. The present invention is not limited to a tire design or material, as described above.

As shown in Figure 1, the example tread 10 has three circumferentially extending main grooves 20, 21, 22, each groove generally defining a U-shaped opening in the tread 10. The main grooves 20, 21, 22 include an axially outermost or outboard groove 20, an axially innermost or inboard groove 22, and at least one middle groove 21 disposed between the outermost groove 20 and the innermost groove 22. In Figure 1, the axially inner direction is indicated by the direction I, whereas the axially outer direction is indicated by the direction O. A radially outer direction is indicated by the direction R. The tread 10 may also include auxiliary circumferentially extending grooves (not shown) which may be disposed between or beside the main grooves 20, 21, 22. The auxiliary grooves may generally be less wide and/or less deep than the main grooves 20, 21, 22. Each of the main grooves 20, 21, 22 may be at least twice as wide and/or at least twice as deep as each of the auxiliary grooves.

Each main groove 20, 21, 22 comprises a cross section with a groove bottom or base 25, 28, 31 laterally separating a pair of essentially radially extending sidewalls 23, 24, 26, 27, 29, 30, and a groove opening essentially radially opposite to the groove bottom 25, 28, 31. The groove opening may be considered as lying in a plane of the tread's surface which contacts the ground when rolling. Alternatively, the groove opening's cross section or profile may be considered as a straight line extending between the radially outer surfaces of two circumferential ribs forming the sidewalls of, or delimiting, the respective groove 20, 21, 22. Each sidewall 23, 24, 26, 27, 29, 30 preferably extend over the majority of the groove's depth and the main grooves 20, 21, 22 preferably generally increase their width in a radially outer direction R.

The groove bottom 25, 28, 31 preferably may extend axially over the majority of the maximum width of the corresponding groove 20, 21, 22. However, in other examples, a groove bottom may be optional. For example, the sidewalls of a groove may laterally meet in just one point in cross section or in one circumferential line.

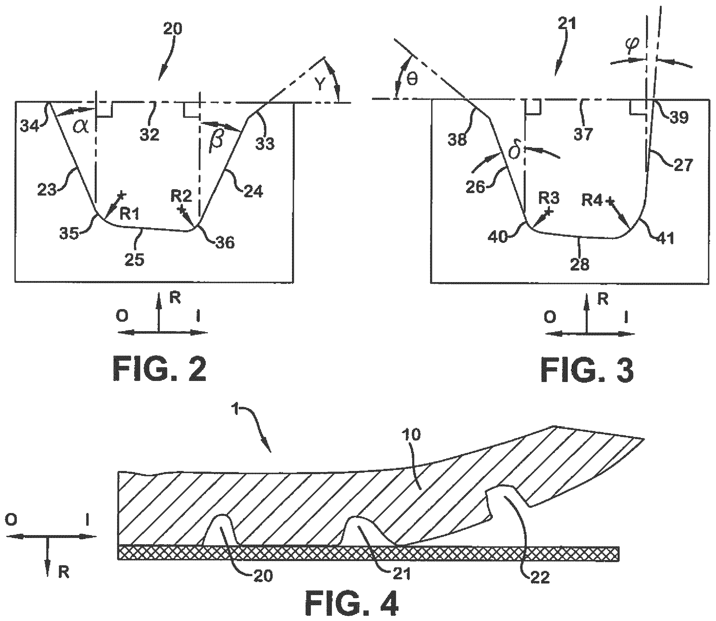

Figure 2 represents a schematic cross section of the outermost groove 20 of the example tread 10 according to Figure 1. Each sidewall 23, 24 of the outermost groove 20 may be tilted with respect to a straight line perpendicular to the groove opening 32. The sidewalls 23, 24 may be tilted by equal or different angles α, β in opposite directions. In Figure 2, both sidewalls 23, 24 are tilted by an angle of about 20°. However, both sidewalls 23, 24 may be tilted by between 25° and 40°, or by between 30° and 35°.

As shown in Figure 2, the outermost groove 20 may include a chamfer 33 at a radially outer end of the inner sidewall 24 which is tilted with respect to the groove opening 32 by an angle γ between 10° and 45°, or between 20° and 35°. The radial height of the chamfer 33 may, for example, be between 10% and 25% of the maximum depth of the groove 20, and the width of the chamfer 33 may, for example, be between 10% and 20% of the cross-sectional width of groove opening 32. On the axially opposite side of the groove 20 (opposite to the chamfer 33), the groove may have a discontinuous edge 34 intended to contact the road when rolling. The groove bottom 25 may be tilted with respect to the groove opening 32 such as to reduce the depth of the outboard groove 20 in an axially outer direction.

The outermost groove's cross section may further include portions 35, 36 joining the groove bottom 25 with the inner sidewall 24 and the outer sidewall 23. The joining portions 35, 36 may be straight, or may be curved and comprise an axially outer joining portion 35 with a radius of curvature R1, and an axially inner joining portion 36 with a radius of curvature R2 inferior to R1. Preferably, the radius of curvature R1 is at least twice the radius of curvature R2.

Figure 3 shows a schematic cross section of a middle groove 21 of the example tread 10 according to Figure 1. Each sidewall 26, 27 of the middle groove 21 may be tilted with respect to a straight line perpendicular to the groove opening 37. The inner sidewall 27 may be tilted by an angle ϕ between 1° and 20°, or between 1° and 10°. The outer sidewall 26 may be tilted by an angle δ between 25° and 40°, or between 30° and 40°. In other words, the outer sidewall 26 may be more tilted than the inner sidewall 27.

Further, the middle groove 21 may include a chamfer 38 at the radially outer end of the outer sidewall 26, which may be tilted with respect to the groove opening 37 by an angle θ between 10° and 45°, or between 20° and 35°, and wherein the height of the chamfer may be between 5% and 15% of the maximum depth of the middle groove 21. The cross-sectional width of the chamfer may be about 5% to 15% of the width of the groove opening. On the axially opposite side of the middle groove 21, instead of a chamfer, the middle groove may include an edge 39 intended to contact the road.

The groove bottom 28 of the middle groove 21 may also be tilted with respect to the groove opening 37 such as to reduce the depth of the middle groove in an outboard direction. Similar to the outer groove, the middle groove 21 may include portions 40, 41 joining the groove bottom 28 with the inner sidewall 27 and the outer sidewall 26. The joining portions 40, 41 may be straight, or may be curved. A curved outer joining portion 40 may have a first radius of curvature R3, and an inner joining portion 41 may have a second radius of curvature R4 superior to R3. For example, the radius of curvature R4 may be at least twice times the radius of curvature R3.

The innermost groove 22, as depicted in Figure 1, may be generally symmetric to the middle groove 21 (as shown in Figure 3) with respect to a plane perpendicular to the axis of the example tire 1. In other words, the cross section of the innermost groove 22 may substantially correspond to the mirrored cross section of the middle groove 21. In particular, the innermost groove 22 may include, from outboard to inboard, an outer sidewall 29, an outer joining portion, a groove bottom 31, an inner joining portion, an inner sidewall 30, and a chamfer with similar or equal angles, similar or equal lengths and/or radii of curvature as described with respect to the middle groove 21. In general, the terms "similar" or "about" may be understood as a variation of a value of less than 20%, or less than 5%.

The width of the middle groove 21 may be larger than the width of the outermost groove 20. The cross-sectional area of the middle groove 21 may correspondingly be larger than the cross-sectional area of the outermost groove 20. Such a feature may further improve the stability of the tire under cornering maneuvers. However, the width and/or the cross-sectional area of the grooves 20, 21, 22 may also be equal. Figure 4 shows a schematic cross section of a deformation of a portion of the example tire 1 of figure 1 during an inboard cornering maneuver with respect to the example tire 1.

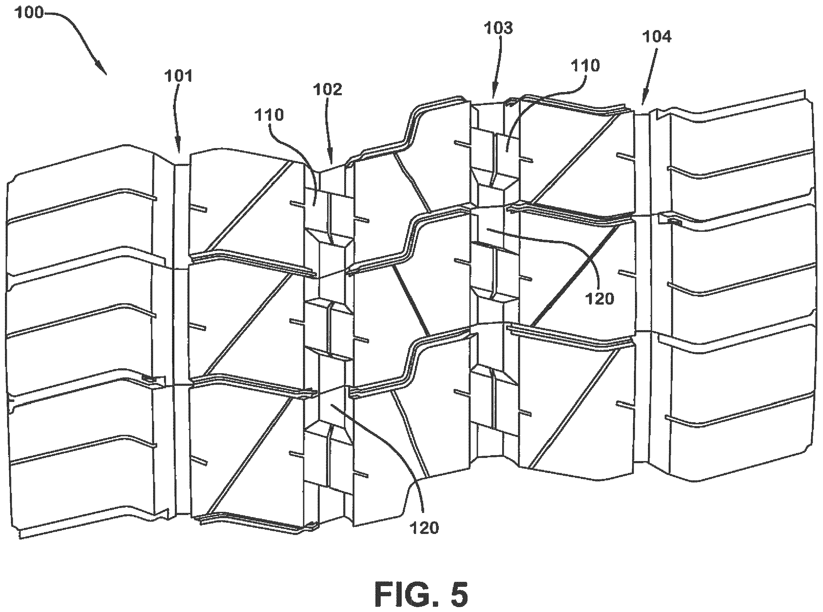

A tire 1 with a tread 100 in accordance with the invention has several circumferential grooves 101, 102, 103, 104 for improving durability (Figures 5-7).

As shown in the embodiment of Figure 5, the tire 1 has one, two or more central grooves 102, 103. Preferably, it has two central grooves 102, 103. One or more of the central grooves 102, 103 includes bridge structures 110 at circumferential intervals about the groove 102, 103 and contoured pockets 120 therebetween. Each pocket 120 preferably has curved transition surfaces separating the bridge structures 110 from curved base surfaces of the pocket 120. The curved transition surfaces preferably have radii of curvature between 2.0 mm and 4.0 mm, such as 3.0 mm. The curved base surfaces preferably have radii of curvature between 4.0 mm and 8.0 mm, such 6.0 mm.

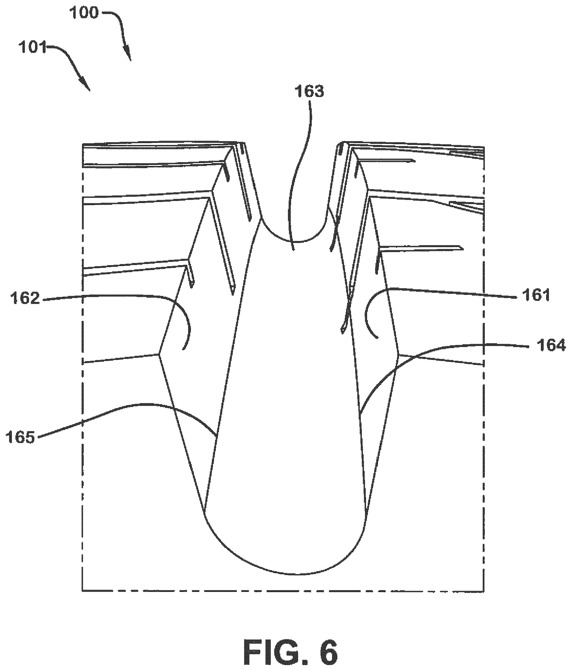

As shown in Figure 6, the tread 100 has a first shoulder groove 101 that is asymmetric in cross-section. Preferably, the first shoulder groove 101 is on the axially outer side of the tire 1 (outboard side) when the tire 1 is mounted on a vehicle in accordance with the tire's specification, i. e. the first shoulder groove 101 is preferably the axially outermost circumferential groove of the tire 1.

The first shoulder groove 101 has a radially angled axially inner sidewall 161 with a first sidewall radial angle β (see Fig. 2 for angle definition) in a range of from 0 degree to 10 degree, preferably from 3 to 7 degree, most preferably 5 degrees, and a radially angled axially outer sidewall 162 with a second sidewall radial angle α (see Fig. 2 for angle definition) in a range of from 10 degree to 25 degree, preferably from 16 to 22 degree, most preferably 19 degree.

Preferably, axially inner sidewall 161 is straight in cross-section or is at least at its radially outer end straight in cross-section.

Preferably, axially outer sidewall 162 is straight in cross-section or is at least at its radially outer end straight in cross-section.

The first shoulder groove 101 further has a curved base surface 163 (when viewed in cross-section) having a radius of curvature at its axially inner edge 164 where the axially inner sidewall 161 transitions into the curved base surface 163 in a range of from 30 mm to 50 mm, preferably 35 mm to 45 mm such as 40 mm, and having a radius of curvature at its axially outer edge 165 where the axially outer sidewall 162 transitions into the curved base surface 163 in a range of from 12 mm to 28 mm, preferably 16 mm to 24 mm such as 20 mm. Furthermore, the curved base surface 163 as it extends from the axially inner edge 164 to the axially outer edge 165 has a minimum radius of curvature in a range of from 1.5 mm to 4 mm such as 2.5 mm.

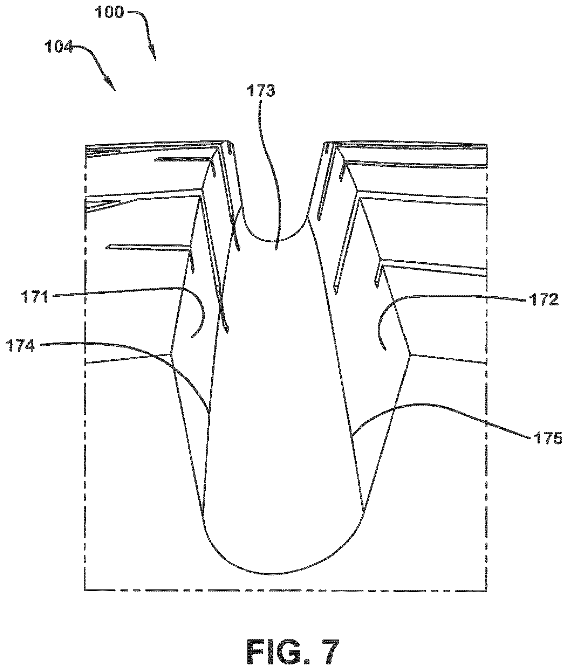

As shown in Figure 7, the tread 100 preferably further has a second shoulder groove 104 that is asymmetric in cross-section. Preferably, the second shoulder groove 104 is on the axially inner side of the tire 1 (inboard side) when the tire 1 is mounted on a vehicle in accordance with the tire's specification, i. e. the second shoulder groove 104 is preferably the axially innermost circumferential groove of the tire 1.

The second shoulder groove 104 has a radially angled axially inner sidewall 171 with a first sidewall radial angle δ (see Fig. 3 for angle definition) in a range of from 3 degree to 13 degree, preferably from 6 to 10 degree, most preferably 8 degrees, and a radially angled axially outer sidewall 172 with a second sidewall radial angle ϕ (see Fig. 3 for angle definition) in a range of from 10 degree to 25 degree, preferably from 16 to 22 degree, most preferably 19 degree.

Preferably, axially inner sidewall 171 is straight in cross-section or is at least at its radially outer end straight in cross-section.

Preferably, axially outer sidewall 172 is straight in cross-section or is at least at its radially outer end straight in cross-section.

It is preferred that δ is larger than β, preferably 3 degrees larger, and that α is equal to ϕ.

The second shoulder groove 104 further has a curved base surface 173 (when viewed in cross-section) having a radius of curvature at its axially inner edge 174 where the axially inner sidewall 171 transitions into the curved base surface 173 in a range of from 30 mm to 50 mm, preferably 35 mm to 45 mm such as 40 mm, and having a radius of curvature at its axially outer edge 175 where the axially outer sidewall 172 transitions into the curved base surface 173 in a range of from 4 mm to 12 mm, preferably 6 mm to 10 mm such as 8 mm. Furthermore, the curved base surface 173 as it extends from the axially inner edge 174 to the axially outer edge 175 has a minimum radius of curvature in a range of from 1.5 mm to 4 mm such as 1.5 mm.

In general, and in addition to the above-described features, it is possible to further reinforce at least the bottom of one or more grooves in order to further improve the groove stiffness under cornering conditions and/or to reduce groove buckling. The combination of groove bottom reinforcements and the groove designs mentioned herein may further improve the groove stiffness and handling performance of the example tire 1.

## Claims

1. A tire comprising an annular tread (100) having a first circumferentially extending asymmetric shoulder groove (101) having a radially angled axially inner sidewall (161) with a first sidewall radial angle (β) in a range of from 0 degree to 10 degree, preferably from 3 to 7 degree or of 5 degrees, and a radially angled axially outer sidewall (162) with a second sidewall radial angle (α) in a range of from 10 degree to 25 degree, preferably from 16 to 22 degree or of 19 degree; **the** tire further includes a first circumferential central groove (102) or a first and a second circumferential central groove (102, 103),
**characterized in that**
the first and/or the second circumferential central groove (102, 103) includes bridge structures (110) at circumferential intervals about the respective circumferential groove (102, 103) and contoured pocket structures (120) therebetween.

2. The tire of claim 1 wherein the first shoulder groove (101) is on the axially outer side of the tire (1) when the tire (1) is mounted on a vehicle in accordance with the tire's specification and/or wherein the first shoulder groove (101) is the axially outermost circumferential groove of the tire (1).

3. The tire of claim 1 or 2 wherein the axially inner sidewall (161) is straight in cross-section or is at least at its radially outer end straight in cross-section and/or wherein the axially outer sidewall (162) is straight in cross-section or is at least at its radially outer end straight in cross-section.

4. The tire of at least one of the previous claims wherein the first shoulder groove (101) has a curved base surface (163) having a radius of curvature at its axially inner edge (164) where the axially inner sidewall (161) transitions into said curved base surface (163) in a range of from 30 mm to 50 mm, preferably 35 mm to 45 mm or of 40 mm, and has a radius of curvature at its axially outer edge (165) where the axially outer sidewall (162) transitions into said curved base surface (163) in a range of from 12 mm to 28 mm, preferably 16 mm to 24 mm or of 20 mm.

5. The tire of claim 4 wherein the curved base surface (163) of the first shoulder groove (101) as the curved base surface (163) extends from the axially inner edge (164) to the axially outer edge (165) has a minimum radius of curvature in a range of from 1.5 mm to 4 mm, preferably of 2.5 mm.

6. The tire of at least one of the previous claims wherein the tread (100) has a second shoulder groove (104) that is asymmetric in cross-section.

7. The tire of claim 6 wherein the second shoulder groove (104) is on the axially inner side of the tire (1) when the tire 1 is mounted on a vehicle in accordance with the tire's specification, and/or wherein the second shoulder groove (104) is the axially innermost circumferential groove of the tire (1).

8. The tire of claim 6 or 7 wherein the second shoulder groove (104) has a radially angled axially inner sidewall (171) with a first sidewall radial angle (δ) in a range of from 3 degree to 13 degree, preferably from 6 to 10 degree or of 8 degrees, and a radially angled axially outer sidewall (172) with a second sidewall radial angle (ϕ) in a range of from 10 degree to 25 degree, preferably from 16 to 22 degree or of 19 degree.

9. The tire of at least one of the claims 6 to 8 wherein the axially inner sidewall (171) of the second shoulder groove (104) is straight in cross-section or is at least at its radially outer end straight in cross-section; and/or wherein the axially outer sidewall (172) of the second shoulder groove (104) is straight in cross-section or is at least at its radially outer end straight in cross-section.

10. The tire of at least one of the previous claims wherein δ is larger than β, preferably 3 degrees or at least 3 degrees larger.

11. The tire of at least one of the previous claims wherein α is equal to ϕ or wherein α and ϕ are at most 2 degrees different.

12. The tire of at least one of the previous claims 6 to 11 wherein the second shoulder groove (104) has a curved base surface (173) having a radius of curvature at its axially inner edge (174) where the axially inner sidewall (171) transitions into the curved base surface (173) in a range of from 30 mm to 50 mm, preferably 35 mm to 45 mm or of 40 mm, and has a radius of curvature at its axially outer edge (175) where the axially outer sidewall (172) transitions into the curved base surface (173) in a range of from 4 mm to 12 mm, preferably 6 mm to 10 mm or of 8 mm.

13. The tire of at least one of the previous claims 6 to 12 wherein the curved base surface (173) of the second shoulder groove (104) as the curved base surface (173) extends from the axially inner edge (174) to the axially outer edge (175) has a minimum radius of curvature in a range of from 1.5 mm to 4 mm or of 1.5 mm.

## Patentansprüche

1. Reifen, der eine ringförmige Lauffläche (100) umfasst, die eine erste sich in Umfangsrichtung erstreckende asymmetrische Schulterrille (101) hat, die eine einen ersten Seitenwandradialwinkel (β) in einem Bereich von 0 Grad bis 10 Grad, vorzugsweise von 3 bis 7 Grad oder von 5 Grad bildende, radial abgewinkelte, axial innere Seitenwand (161), und eine einen zweiten Seitenwandradialwinkel (α) in einem Bereich von 10 Grad bis 25 Grad, vorzugsweise von 16 bis 22 Grad oder von 19 Grad bildende, radial abgewinkelte, axial äußere Seitenwand (162), aufweist; wobei der Reifen weiterhin eine erste zentrale Umfangsrille (102) oder eine erste und eine zweite zentrale Umfangsrille (102, 103) aufweist,
**dadurch gekennzeichnet, dass** die erste und/oder die zweite zentrale Umfangsrille (102, 103) Brückenstrukturen (110) in Umfangsintervallen um die jeweilige Umfangsrille (102, 103) und konturierte Taschenstrukturen (120) dazwischen umfassen.

2. Reifen nach Anspruch 1, wobei die erste Schulterrille (101) sich auf der axial äußeren Seite des Reifens (1) befindet, wenn der Reifen (1) gemäß der Reifenspezifikation auf ein Fahrzeug montiert ist, und/oder wobei die erste Schulterrille (101) die axial äußerste Umfangsrille des Reifens (1) ist.

3. Reifen nach Anspruch 1 oder 2, wobei die axial innere Seitenwand (161) im Querschnitt gerade ist oder zumindest an ihrem radial äußeren Ende im Querschnitt gerade ist; und/oder wobei die axial äußere Seitenwand (162) im Querschnitt gerade ist oder zumindest an ihrem radial äußeren Ende im Querschnitt gerade ist.

4. Reifen nach mindestens einem der vorhergehenden Ansprüche, wobei die erste Schulterrille (101) eine gekrümmte Grundfläche (163) aufweist, die an ihrem axial inneren Rand (164), wo die axial innere Seitenwand (161) in die gekrümmte Grundfläche (163) übergeht, einen Krümmungsradius im Bereich von 30 mm bis 50 mm, vorzugsweise 35 mm bis 45 mm oder 40 mm hat, und einen Krümmungsradius an seiner axial äußeren Kante (165), wo die axial äußere Seitenwand (162) in die gekrümmte Grundfläche (163) übergeht, in einem Bereich von 12 mm bis 28 mm, vorzugsweise 16 mm bis 24 mm oder von 20 mm, hat.

5. Reifen nach Anspruch 4, wobei die gekrümmte Grundfläche (163) der ersten Schulterrille (101), wenn die gekrümmte Grundfläche (163) sich von der axial inneren Kante (164) zur axial äußeren Kante (165) erstreckt, einen minimalen Krümmungsradius in einem Bereich von 1,5 mm bis 4 mm, vorzugsweise von 2,5 mm, aufweist.

6. Reifen nach mindestens einem der vorhergehenden Ansprüche, wobei die Lauffläche (100) eine zweite Schulterrille (104) aufweist, die im Querschnitt asymmetrisch ist.

7. Reifen nach Anspruch 6, wobei die zweite Schulterrille (104) sich auf der axial inneren Seite des Reifens (1) befindet, wenn der Reifen (1) gemäß der Reifenspezifikation auf einem Fahrzeug montiert ist, und/oder wobei die zweite Schulterrille (104) die axial innerste Umfangsrille des Reifens (1) ist.

8. Reifen nach Anspruch 6 oder 7, wobei die zweite Schulterrille (104), die eine einen ersten Seitenwandradialwinkel (δ) in einem Bereich von 3 Grad bis 13 Grad, vorzugsweise von 6 bis 10 Grad oder von 8 Grad bildende, radial abgewinkelte, axial innere Seitenwand (171), und eine einen zweiten Seitenwandradialwinkel (ϕ) in einem Bereich von 10 Grad bis 25 Grad, vorzugsweise von 16 bis 22 Grad oder von 19 Grad bildende, radial abgewinkelte, axial innere Seitenwand (172), aufweist.

9. Reifen nach mindestens einem der Ansprüche 6 bis 8, wobei die axial innere Seitenwand (171) der zweiten Schulterrille (104) im Querschnitt gerade ist oder zumindest an ihrem radial äußeren Ende im Querschnitt gerade ist; und/oder wobei die axial äußere Seitenwand (172) der zweiten Schulterrille (104) im Querschnitt gerade ist oder zumindest an ihrem radial äußeren Ende im Querschnitt gerade ist.

10. Reifen nach mindestens einem der vorhergehenden Ansprüche, wobei δ größer als β ist, vorzugsweise 3 Grad oder mindestens 3 Grad größer.

11. Reifen nach mindestens einem der vorhergehenden Ansprüche, wobei α gleich ϕ ist, oder wobei α und ϕ höchstens 2 Grad voneinander abweichen.

12. Reifen nach mindestens einem der vorhergehenden Ansprüche 6 bis 11, wobei die zweite Schulterrille (104) eine gekrümmte Grundfläche (163) aufweist, die an ihrem axial inneren Rand (174), wo die axial innere Seitenwand (171) in die gekrümmte Grundfläche (173) übergeht, einen Krümmungsradius im Bereich von 30 mm bis 50 mm, vorzugsweise 35 mm bis 45 mm oder 40 mm hat, und einen Krümmungsradius an seiner axial äußeren Kante (175), wo die axial äußere Seitenwand (172) in die gekrümmte Grundfläche (173) übergeht, in einem Bereich von 4 mm bis 12 mm, vorzugsweise 6 mm bis 10 mm oder von 8 mm, hat.

13. Reifen nach mindestens einem der vorhergehenden Ansprüche 6 bis 12, wobei die gekrümmte Grundfläche (173) der zweiten Schulterrille (104), wenn die gekrümmte Grundfläche (173) sich von der axial inneren Kante (174) zur axial äußeren Kante (175) erstreckt, einen minimalen Krümmungsradius in einem Bereich von 1,5 mm bis 4 mm, oder von 1,5 mm, aufweist.

## Revendications

1. Bandage pneumatique qui comprend une bande de roulement (100) de forme annulaire possédant une première rainure d'épaulement asymétrique (101) s'étendant dans la direction circonférentielle, qui possède une première paroi latérale (161) interne dans la direction axiale qui forme un premier angle radial de paroi latérale (β) qui se situe dans une plage allant de 0 degré à 10 degrés, de préférence de 3 degrés à 7 degrés ou de 5 degrés, et une deuxième paroi latérale (162) externe dans la direction axiale qui forme un deuxième angle radial de paroi latérale (α) qui se situe dans une plage allant de 10 degrés à 25 degrés, de préférence de 16 à 22 degrés ou de 19 degrés ; le bandage pneumatique comprenant en outre une première rainure centrale circonférentielle (102) ou une première et une deuxième rainure centrale circonférentielle (102, 103) ;
**caractérisé en ce que** la première et/ou la deuxième rainure centrale circonférentielle (102, 103) comprend/comprennent des structures faisant pont (110) à des intervalles circonférentiels autour de la rainure circonférentielle respective (102, 103) et des structures profilées en forme de poches (120) entre elles.

2. Bandage pneumatique selon la revendication 1, dans lequel la première rainure d'épaulement (101) est située sur le côté externe, dans la direction axiale, du bandage pneumatique (1) lorsque le bandage pneumatique (1) est monté sur un véhicule en conformité avec les spécifications du bandage pneumatique et/ou dans lequel la première rainure d'épaulement (101) représente la rainure circonférentielle la plus externe, dans la direction axiale, du bandage pneumatique (1).

3. Bandage pneumatique selon la revendication 1 ou 2, dans lequel la paroi latérale (161) interne, dans la direction axiale, est rectiligne en section transversale ou est rectiligne en section transversale au moins à son extrémité externe dans la direction radiale et/ou dans lequel la paroi latérale (162) externe, dans la direction axiale, est rectiligne en section transversale ou est rectiligne en section transversale au moins à son extrémité externe dans la direction radiale.

4. Bandage pneumatique selon au moins une des revendications précédentes, dans lequel la première rainure d'épaulement (101) possède une surface de base courbe (163) qui possède un rayon de courbure à son bord (164) interne, dans la direction axiale, à l'endroit où la paroi latérale (161) interne, dans la direction axiale, se transforme pour obtenir ladite surface de base courbe (163), qui se situe dans une plage allant de 30 mm à 50 mm, de préférence de 35 mm à 45 mm ou de 40 mm, et possède un rayon de courbure à son bord (165) externe, dans la direction axiale, à l'endroit où la paroi latérale (162) externe, dans la direction axiale, se transforme pour obtenir ladite surface de base courbe (163), qui se situe dans une plage allant de 12 mm à 28 mm, de préférence de 16 mm à 24 mm ou de 20 mm.

5. Bandage pneumatique selon la revendication 4, dans lequel la surface de base courbe (163) de la première rainure d'épaulement (101) lorsque la surface de base courbe (163) s'étend à partir du bord (164) interne dans la direction axiale jusqu'au bord (165) externe dans la direction axiale possède un rayon de courbure minimal qui se situe dans une plage allant de 1,5 mm à 4 mm, de préférence de 2,5 mm.

6. Bandage pneumatique selon au moins une des revendications précédentes, dans lequel la bande de roulement (100) possède une deuxième rainure d'épaulement (104) qui est asymétrique en section transversale.

7. Bandage pneumatique selon la revendication 6, dans lequel la deuxième rainure d'épaulement (104) est située sur le côté interne, dans la direction axiale, du bandage pneumatique (1) lorsque le bandage pneumatique (1) est monté sur un véhicule en conformité avec les spécifications du bandage pneumatique et/ou dans lequel la deuxième rainure d'épaulement (104) représente la rainure circonférentielle la plus interne, dans la direction axiale, du bandage pneumatique (1).

8. Bandage pneumatique selon la revendication 6 ou 7, dans lequel la deuxième rainure d'épaulement (104) possède une paroi latérale (171) interne dans la direction axiale qui forme un premier angle radial de paroi latérale (δ) qui se situe dans une plage allant de 3 degrés à 13 degrés, de préférence de 6 degrés à 10 degrés ou de 8 degrés, et une paroi latérale (172) externe dans la direction axiale dans la direction radiale qui forme un deuxième angle radial de paroi latérale (ϕ) qui se situe dans une plage allant de 10 degrés à 25 degrés, de préférence de 16 à 22 degrés ou de 19 degrés.

9. Bandage pneumatique selon au moins une des revendications 6 à 8, dans lequel la paroi latérale (171) interne, dans la direction axiale, de la deuxième rainure d'épaulement (104) est rectiligne en section transversale ou est rectiligne en section transversale au moins à son extrémité externe dans la direction radiale et/ou dans lequel la paroi latérale (172) externe, dans la direction axiale, de la deuxième rainure d'épaulement (104) est rectiligne en section transversale ou est rectiligne en section transversale au moins à son extrémité externe dans la direction radiale.

10. Bandage pneumatique selon au moins une des revendications précédentes, dans lequel δ est supérieur à β, de préférence est supérieur à concurrence de 3 degrés ou au moins de 3 degrés.

11. Bandage pneumatique selon au moins une des revendications précédentes, dans lequel a est égal à ϕ, ou dans lequel a et ϕ sont différents au maximum à concurrence de 2 degrés.

12. Bandage pneumatique selon au moins une des revendications précédentes 6 à 11, dans lequel la deuxième rainure d'épaulement (104) possède une surface de base courbe (173) qui possède un rayon de courbure à son bord (174) interne, dans la direction axiale, à l'endroit où la paroi latérale (171) interne, dans la direction axiale, se transforme pour obtenir ladite surface de base courbe (173), qui se situe dans une plage allant de 30 mm à 50 mm, de préférence de 35 mm à 45 mm ou de 40 mm, et possède un rayon de courbure à son bord (175) externe, dans la direction axiale, à l'endroit où la paroi latérale (172) externe, dans la direction axiale, se transforme pour obtenir ladite surface de base courbe (173), qui se situe dans une plage allant de 4 mm à 12 mm, de préférence de 6 mm à 10 mm ou de 8 mm.

13. Bandage pneumatique selon au moins une des revendications précédentes 6 à 11, dans lequel la surface de base courbe (173) de la deuxième rainure d'épaulement (104) lorsque la surface de base courbe (173) s'étend à partir du bord (174) interne dans la direction axiale jusqu'au bord (175) externe dans la direction axiale possède un rayon de courbure minimal qui se situe dans une plage allant de 1,5 mm à 4 mm, ou de 1,5 mm.
